Europäisches Patentamt

European Patent Office

Office européen des brevets

(11) Publication number: **0 230 419 B1**

# EUROPEAN PATENT SPECIFICATION
## published in accordance with Art. 158(3) EPC

(45) Date of publication of patent specification: **20.03.91**

(51) Int. Cl.⁵: **E04B 5/48**, //E04B1/70, F24F7/08

(21) Application number: **85905542.8**

(22) Date of filing: **28.10.85**

(86) International application number:
**PCT/SE85/00421**

(87) International publication number:
**WO 86/02683 (09.05.86 86/10)**

(54) **A METHOD OF VENTILATION.**

(30) Priority: **30.10.84 SE 8405423**

(43) Date of publication of application:
**05.08.87 Bulletin 87/32**

(45) Publication of the grant of the patent:
**20.03.91 Bulletin 91/12**

(84) Designated Contracting States:
**AT CH DE FR GB LI NL**

(56) References cited:
**DE-A- 2 165 796**
**FR-A- 225 753**
**NO-B- 150 736**
**SE-A-82 035 791**

(73) Proprietor: **AF KLINTEBERG, Peter**
**Storgatan 2**
**S-285 00 Markaryd(SE)**

(72) Inventor: **AF KLINTEBERG, Peter**
**Storgatan 2**
**S-285 00 Markaryd(SE)**

(74) Representative: **Wallengren, Yngvar**
**Patentbyran Y Wallengren AB Box 116**
**S-331 01 Värnamo(SE)**

## Description

The present invention relates to a method for ventilating a floor in a building, comprising the step of causing air to flow into a ventilation space between a sleeper floor and an upper floor, air penetration through the upper floor into the ventilation space being prevented.

So-called ventilated floors are previously known in which there is provided a ventilation space between a sleeper floor and an upper floor. As a rule, then ventilation in such a ventilated floor has been left to its own devices, for which reason the air change rate beneath the upper floor has been very poor. A certain help has, in this context, been obtainable in that the upper floor is subjected to deformation when people or objects move on the upper floor surface, so that a certain pump action has been realised.

In SE-B-441 609 there is disclosed a floor designed in this way. In this floor design the ventilation space is defined between the sleeper floor and the lower side of a spacer member carrying on its upper surface an upper floor. The ventilation space opens freely into the room above the floor and the ventilation effect, if any, is only caused by the pumping effect obtained by deformations in the upper floor.

The floor according to SE-B-441 609 is not capable of removing any significant quantities of water from the sleeper floor and the amount removed could not be controlled. Therefore, this floor is only intended for making it possible to use, e.g. in a shower or a bathroom, a floor top covering not permeable to water.

No matter how the ventilation of the sleeper floor has been effected, it has not been possible to maintain any supervision of the ventilation results, i.e. it has not been possible to check the volume of extracted moisture or water. It follows from this that it has not been possible to maintain a supervision of creepage movements in the upper floor caused by variations in the presence of damp. Moreover, mention should be made of a serious drawback, namely that a certain extraction of water has taken place from the sleeper floor which has entailed a temperature reduction, above and beyond the perhaps already low temperature prevailing in the sleeper floor, with the result that the upper floor has also been perceived as very cold and uncomfortable, which has entailed that the standard of comfort in the premises has been low, unless very high temperatures have been allowed to prevail in the premises in question. Further, in a ventilated floor design using deformations of the upper floor as a pumping means there has been no guarantee whatsoever that the whole sleeper floor has been ventilated. Pockets of still air have been a common problem.

The object of the present invention is to realise a method for ventilation of the type disclosed by way of introduction. This method is of such a nature as to obviate the above-outlined problems and to ensure efficient ventilation and extraction of damp, at the same time as damp-responsive movements in the upper floor are avoided and temperature equilibrium in a vertical direction in the building is realised. A further object of the present invention is also to realise such a method as offers good possibilities for heat recovery and ventilation evenly distributed over the surface of the sleeper floor.

The object forming the basis of the present invention is attained if the method intimated by way of introduction is characterized in that the air is taken in at a temperature which is preferably higher than the temperature prevailing at the level of the sleeper floor or in the ventilation space and is led down into the ventilation space; that the air is led from the ventilation space to a measurement point where the relative humidity of the air is measured; and that the air is led through a drive means from whence it is permitted to depart, said drive means being maintained at a minimum output when the value measured at said measurement point is less than a predetermined value, and the output of the drive means is increased when the value measured at said measurement point exceeds said predetermined value.

A particularly advantageous embodiment of the present invention will be realised if the method is further characterized in that the air is taken in at a high level in the space where the floor is located. Further advantages will be attained according to the present invention if the method is also given any one or more of the characterising features as disclosed in claims 2 to 5 and 7-8.

The nature of the present invention and its aspects will be more readily understood from the following brief description of the accompanying Drawings, and discussion relating thereto.

In the accompanying Drawings:

Fig. 1 schematically illustrates a section through a floor for reducing the method according to the invention into practice;

Fig. 2 is a section through a modified embodiment of the floor; and

Fig. 3 shows, in schematic form, an example of how the air flow may be arranged in a relevant space.

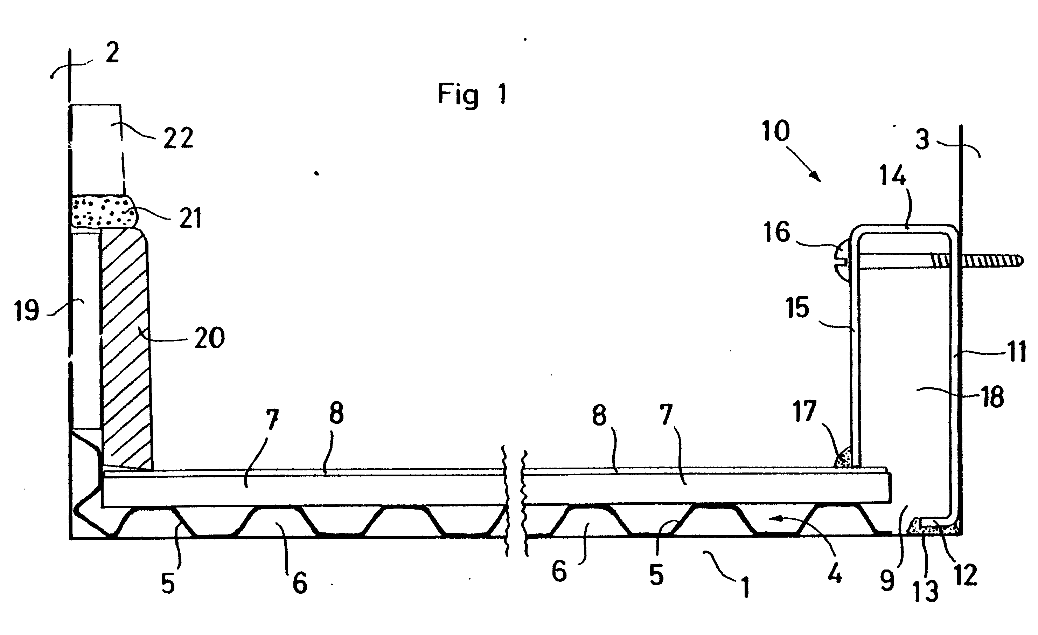

Referring to the Drawings, Fig. 1 shows, by reference numeral 1, the material of a base, or sleeper floor, by reference numeral 2 a first wall connecting to the sleeper floor, and by reference numeral 3 a second wall connecting to the sleeper floor.

According to the present invention, there is disposed, on the upper face of the sleeper floor, a spacer member 4 which may consist of a so-called plateau pad which has cup-like projections 5 disposed in alternate rows so that there are formed therebetween free duct spaces 6 which preferably have their major surface turned to face the sleeper floor 1. Furthermore, the cup-like projections 5 are dimensioned in such a manner as to possess considerable load-carrying capacity and are placed such that the plateau pad is capable of absorbing the loadings which may normally be placed on a floor.

The use of a plateau pad of the above-outlined design will gain the considerable advantage that the ducts 6 will extend in both directions and that they, moreover, cover the greater part of the upper face of the sleeper floor 1.

On the upper side of the spacer member 4, there is disposed a panel 7 or a load-carrying member which, in practice, may consist of chipboard, masonite or similar material. Finally, on the upper face of the panel 7, there is provided a floor covering 8 which may consist of a glued plastic matting or the like.

According to the present invention, the purpose of the panel 7 is to distribute the loadings which may rest on the floor in such a manner that the spacer member 4 is not locally overloaded, which would thereby possibly compress the cup-like projections 5.

According to the present invention, it may be seen as essential that either the panel 7 or the floor covering 8 be tight so that no air may penetrate through these members.

In one alternative to the construction shown on the Drawings, it is possible to employ a thermally insulating layer, which, in such a case, may be placed on the upper face of the panel 7 and, naturally, be designed and dimensioned in such a manner as to be capable of taking up the loadings which normally rest on a floor. The upper face of this thermally insulating layer may then suitably be fitted with a new panel or nailable covering, on which, for example, a parquet floor, wall-to-wall carpeting or some other floor covering material may be placed. In such cases when the thermally insulating layer is not wholly tight to air penetration, there should, according to the present invention, be provided an interjacent barrier layer which prevents air flow from the upper face of the floor down into the ducts 6 in the spacer member 4. Such a barrier layer may, for example, consist of the floor covering 8 proper, but could just as well comprise a separate plastics sheeting or the like.

A first edge portion of the floor according to the present invention is designed in such a manner that there is formed a gap 9 between the edge portions of the floor covering 8 and the panel 7, adjacent the proximal wall 3. In this region, there is further disposed a floor moulding 10 which is in the form of a hollow plastic or metal profile which has a wall 11 connecting to the wall 3, there being provided, at the lower end of this wall 11, an inwardly angled portion 12 which is intended for the vertical positional fixation of the profile and for sealing thereof against the sleeper floor 1 and the wall 3. Suitably, the sealing may here be realised by means of a putty strand, or by a sealing strip 13 manufactured of rubber or plastics. Furthermore, the profile has an upper wall 14 and an outer wall 15 which may be approximately parallel to the wall 11. For anchorage of the profile 10, screws 16 may be employed, which, with suitable spacing, extend straight through the profile and into the wall 3.

The floor moulding 10 may, according to the invention, be considered as a closed channel, the outer wall 15 of the floor moulding being, at its lower end, provided with a sealing strip 17 or a strand of sealing putty which seals against the floor covering 8.

It will be apparent from the above description of the floor construction and the profile 10 that the ducts 6 disposed in the spacer member 4 discharge freely into the interior 18 of the profile 10. Furthermore, the profile 10 is connected, at a suitable point, to a conduit which, in its turn, is in communication with a suction fan, whereby this suction fan may, consequently, suck out such air as is located in the ducts 6.

The floor according to the present invention is of a design along a second edge portion which is apparent from the left-hand half of the Drawings. Thus, the spacer member 4 extends up a short distance along the wall 2 so that the ducts 6 may extend about the end edge of the panel 7 and discharge upwardly on the outside of the wall 2. Above the upper edge of the portion of the spacer member 4 bent up towards the wall 2, there are disposed a number of spacers 19 whose purpose is to hold a floor moulding 20 spaced from the wall 2, so that there are formed, on the rear face of the floor moulding 20, flow passages in communication with the ducts 6 in the spacer member 4. Furthermore, there is disposed, on the upper face of the floor moulding 20 and the spacers 19, an elongate filter body 21 which is held in place by means of an upper retainer strip 22. In this case, the filter body functions such that it realises a partial vacuum in the ducts 6, at the same time as preventing the entry of dust, dirt and other foreign matter into the ducts. The partial vacuum prevailing in the ducts 6 is advantageous in at least two ways, first by creating a force urging the panel 7 against the sleeper floor 1 and thus preventing the occurrence of bubbles or blisters in the panel 7; and secondly in that the partial vacuum facilitates upward damp migration in the sleeper floor 1 and, to a certain extent, also causes evaporation of the rising damp.

According to the present invention, those portions of the floor which are fitted with the profile 10 and the flow passages behind the floor moulding 20 should be of such mutual spacing that the air flow substantially covers the whole of the underface of the spacer member 4. In order to realise this situation, it may be appropriate that those portions of the edges of the floor which are not designed in the aforementioned manner be sealed-off by means of conventional floor mouldings, possibly in combination with sealing strips, against their connecting walls.

In certain situations, it may occur that the temperature of the sleeper floor 1 is considerably lower than the temperature of the air sucked in through the filter body 21, for example if a thermally-insulating layer is placed on the spacer member 4 or if the sleeper floor is recumbent directly on cold ground without subjacent thermal insulation. If, in such an instance, the RH of the intake air is high, the situation may, theoretically speaking, arise that there is precipitation of the moisture entrained with the incoming air when the temperature of this air is reduced on contact with the sleeper floor 1. In order to pre-empt such situations, two alternative methods may be selected.

First, the temperature in the sleeper floor 1 may, naturally, be monitored and adjusted in relation to the temperature and RH of the air which is sucked in beneath the spacer member 4. When critical values subsequently occur of the measured parameters, the suction fan in communication with the profile 10 may quite simply be stopped. It might possibly also be sufficient to measure the temperature of the air which flows in through the filter body 21 and of the air which is located in the interior 18 of the profile 10. When the temperature in the interior 18 of the profile 10 falls to a level which deviates considerably from the temperature of the incoming air, this may be interpreted as a signal of a low temperature in the ducts 6 and a consequential, possibly critical, damp situation in the ducts. Naturally, the suction fan should also be shut off in this case. Finally, it is also possible to effect direct measurements of the RH down beneath the spacer member.

Secondly, in order to counteract the apprehended moisture precipitation beneath the spacer member 4, it is possible to raise the temperature in that region, which can be effected by increasing the air flow so that the airborne heat will be sufficient to raise the temperature of the sleeper floor to a safe level. Alternatively, or as a complement, it is also, naturally, possible to treat the intake air by a temperature increase and/or by dehumidification.

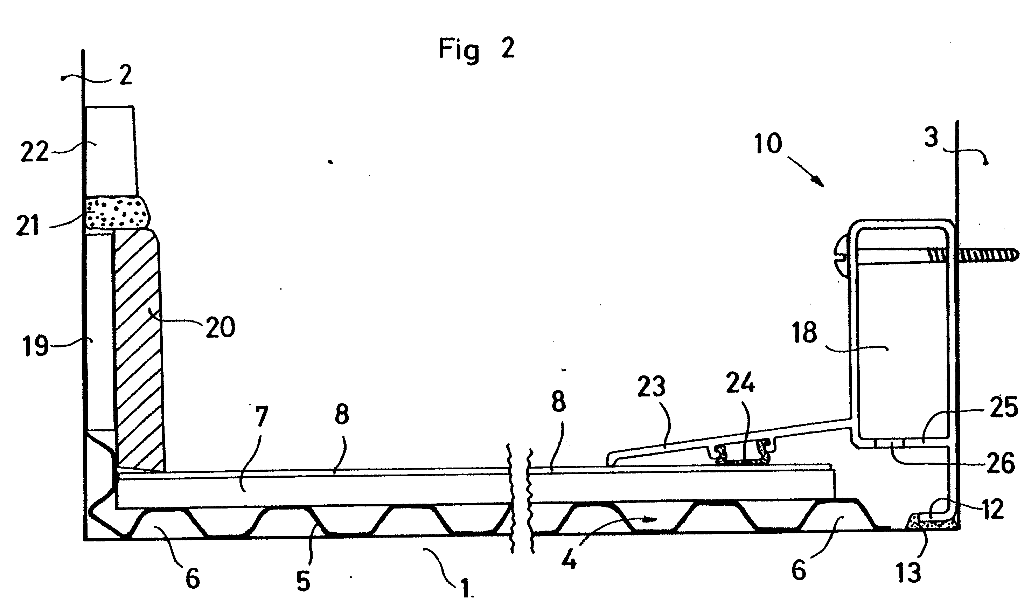

Fig. 2 shows a construction which may be considered as a floating floor structure. This construction is particularly suitable in large, continuous floors where the creepage which may occur because of varying damp or temperature conditions in the floor material may be great.

In the embodiment illustrated in Fig. 2, the panel 7 is suitably positionally fixed at the floor moulding 20 in the left-hand edge of the Drawing. The movements which the panel 7 undergoes on varying humidity conditions will, on the other hand, be taken up at the right-hand edge portion in the Drawing. In order to permit such movements between the panel 7 and the wall 3, the profile 10 is provided with a shank 23 which extends out over an edge portion of the panel 7 and the floor covering 8. On the underface of the shank 23, there are disposed longitudinal anchorages for retaining a sealing strip 24 of rubber or suitable plastics material, this sealing strip being appropriately designed so as to slide on the upper face of the floor covering 8 or otherwise be designed so as to execute a rolling movement in relation to the floor covering.

The profile 10 illustrated in Fig. 2 is, furthermore, modified in such a manner that the portion connecting to wall 3 is designed as a tube of rectangular cross-section, this affording a very high degree of stability and resistance to mechanical action. In order to establish communication between the interior 18 of this tube and the ducts in spacer member 4 there is disposed a series of openings 26 in the bottom wall 25 of the tube, the openings placing the interior of the profile in communication with the ducts 6 in the spacer member 4.

The placing of the bottom wall 25 is not especially critical, but, naturally, it should be placed at such a height above the inwardly bent portion 12 that the panel 7 can be slid in beneath the bottom wall without the risk of blocking the openings 26.

In such constructions where the floor space areas are very large and where, consequently, the creepage movements in the panel 7 may be considerable, it can be inadvisable to provide for the absorption of these creepage movements along one wall alone. In such a situation, the floor moulding 20 may be substituted by a profile similar to the profile 10 of Fig. 2, the profile being solely sealed at its ends and/or the openings 26 being dispensed with. It further suitably applies that the sealing strip 24 may be substituted by a filter element with the same function as the filter element 21 in the embodiment according to Fig. 1. Alternatively, the sealing strip 24 may, naturally, be retained and, instead, the interior 18 of the profile may be filled with a filter material, at the same time as the openings 26 are, naturally, retained.

According to the present invention, the floor moulding 20 in both the embodiments of Fig. 1 and Fig. 2 may be replaced by a floor moulding of the type which is provided with a series of recesses in its lower edge. In such an instance, the spacers 19 are also dispensed with, as well as the portion of the spacer member bent up towards the wall 2, whereby the flow spaces will be formed by the recesses of the floor moulding about the end edge of the panel 7 and down into the ducts 6. Some form of filter element should also be employed in this embodiment, being suitably disposed in the recesses of the floor moulding or in the space between the end edge of the panel 7 and the wall 2.

In such situations where treatment of the incoming air beneath the spacer member is to be effected, the floor moulding 20 or its counterpart must be replaced by a closed channel-forming moulding of the type which, in principle, is employed on the discharge side.

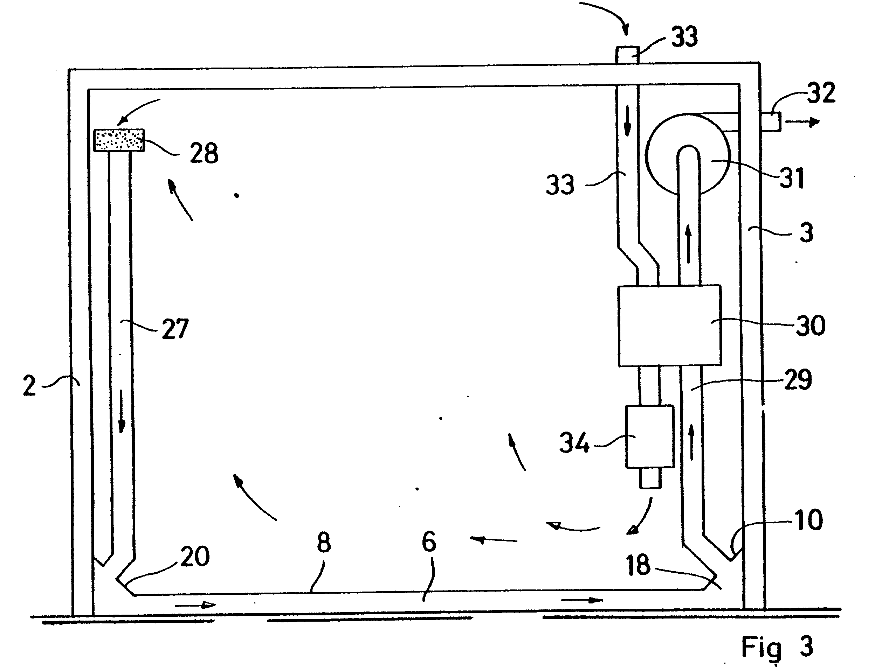

Fig. 3 illustrates a room or a space which is equipped for reducing the present invention into practice. It will, thus, be apparent from the Figure that the room is defined by two side walls 2 and 3, and that it rests on a sleeper floor 1 which it may be feared is exposed to damp attack. Above the sleeper floor 1, there is disposed a ventilation space 6 which, in one practical embodiment, may be designed as that described above with reference to Figs. 1 and 2. Furthermore, there is a load-carrying layer disposed above the ventilation space 6, on whose upper face some type of floor covering 8 is placed.

The ventilation space 6 is closed against the walls of the room but is in communication with main ducts or distribution boxes which are designed so as to provide a uniform flow pattern throughout the entire floor, i.e. throughout the entire ventilation space 6. These main ducts may be of the aforementioned design, such that they are disposed as floor mouldings 10 and 20, recumbent on the floor and preferably located along opposing walls 2 and 3. Alternatively, the main ducts may, naturally, also be placed beneath the upper floor and possibly recessed down into the sleeper floor. A number of branch ducts (possibly recessed into the sleeper floor) may, furthermore, extend from the main ducts, their purpose being to uniformly distribute the air flowing over the surface of the floor. Such branch ducts are particularly advantageous if the main ducts are not located along the opposing walls 2 and 3.

The main duct 20 to the left in Fig. 3 is connected to a conduit 27 which extends upwardly into the room, preferably up to ceiling level. The concept here is that the air which is sucked in through the conduit 27 and down into the distribution box 20, and further to the ventilation space 6 and so on, be taken from the room at a position where the air temperature is as high as possible. The reason for this is that, in a normal room, there is often a temperature difference of the order of magnitude of 2 to 50 between floor level and ceiling level. If, thus, the air which has the highest temperature in the room is led down into the ventilation space 6, there will be obtained an improved moisture absorption and a temperature equilibrium in the room in a vertical direction, in that the temperature of the floor is raised and the temperature of the upper air strata is lowered. Such a temperature equilibrium - and primarily an increase in the temperature of the floor - will be experienced by occupants as a considerable increase in comfort within the room.

In certain cases, an improved effect may be obtained if the air to the conduit 27 is not taken from the room, but from a possibly centrally located air conditioning plant. This air conditioner is designed so as to permit dehumidification and/or heating of the intake air. The air to the air conditioner is suitably taken from the interior of the building, but may, in exceptional cases, also be taken from outside.

A further solution is also conceivable in which the air to the floor moulding 20 is taken at floor level and in which the incoming air is conditioned to the correct temperature and RH and is then caused to flow to the floor moulding.

The conduit 27 has, at its upper end, a suitable filter device 28 which has the same function as the aforementioned filter bodies 21.

The Drawings show a single conduit 27, but, naturally, several such conduits may be employed, these being, in such an event, distributed along the length of the floor moulding 20. Furthermore, there is disposed, interiorly in the floor moulding, or in a distribution duct which is parallel to the moulding and has a number of connections with the interior of the floor moulding, a damper, so that the air flow will be uniform throughout the entire ventilation space 6.

The floor moulding 10 at the opposing wall is also connected to a conduit 29 which, in the illustrated embodiment, leads to a heat exchanger 30 whence the conduit 29 leads to a fan 31 whose outlet 32 discharges on the outside of the room. The air evacuated by the fan 31 is replaced by air which is taken in from ambient surroundings, by the intermediary of a conduit 33 which also passes through the heat exchanger 30, so that heat exchange may be effected from the air in the conduit 29 to the air in the conduit 33, i.e. so as to realise heat recovery.

On the downstream side of the heat exchanger 30, the conduit 33 leads to a so-called duct heater 34 which is a heating apparatus disposed for the supply of heat to the air flowing along the conduit 33.

In the embodiment according to Fig. 3, and also in the aforementioned embodiments, there is included a regulator system for the fan 3I. In its simplest form, this regulator system comprises a humidity sensor placed in the interior 18 of the floor moulding 10 or possibly in the conduit 29. This humidity sensor senses the RH of the air which has passed through the ventilation space 6. The output signal from this humidity sensor is passed to a central regulation unit where adjustment may be effected of the maximum permitted value of the RH. The central regulating unit is, furthermore, designed so as to keep the fan 31 connected at low output, preferably continually, so that a constant air flow is led through the ventilation space 6.

This low fan output may be set at a suitable value, but is then maintained constant on normal regulation. The intention with this arrangement is to maintain the floor at a moderately acceptable level of humidity, since too low a level of humidity may give rise to problems in the form of shrinkage in a wooden floor, and too high a level of humidity will cause swelling problems.

If the value sensed by the humidity sensor for the RH later exceeds, during certain periods, a certain threshold level which may be set in the central regulating unit, the fan 31 will be switched to another operational state where its output is greater, so that there will thereby be realised a more rapid air flow through the ventilation space. Regulation of the fan 31 may, according to the present invention, be effected either stepwise or continually, the fan having, in extreme cases, but two speeds - one for continuous operation and one for operation during such periods when the measured RH of the air departing from the ventilation space is too high.

There is further coupled into the regulating system a temperature sensor which, when necessary, couples in the duct heater 34, so that the air supplied to the room is at a suitable temperature.

In Fig. 3, the fan, heat exchanger and duct heater installation have been illustrated as placed directly in the room which is to be ventilated. Naturally, it is also possible - and in actual fact this is probably the most common solution - to place these components centrally in a specially dedicated space and then to employ a system of conduits or open ventilation grids between different rooms so that the same apparatuses may be employed for several different rooms.

, Maintaining a constant RH in the air departing from the ventilation space 6 is of crucial importance in such situations where the floor space area is large, since the damp-responsive movements in, for example, a wooden floor, would otherwise be far too great. This applies both when humidity increases and when it falls, for which reason no attempt should be made to create far too low RH in the departing air.

According to the invention, there is nothing to prevent the heat exchanger 30 and the fan 31 from being substituted by such a dual channel fan as has a through channel for incoming air and a through channel for air advanced by the fan, the arrangement being such that heat exchange takes place between these two channels.

It is also possible, according to the present invention, to connect the discharge outlet of the fan 31 to a heat recovery system which is already disposed in the building, in which event at least the heat exchanger 30 may be dispensed with. If this heat recovery system also includes means for heating the intake replacement air, the duct heater 34 may also very well be dispensed with, in which case, air supply must be effected by the intermediary of supply air terminals to all rooms where extraction takes place.

In a slightly modified regulating system according to the present invention, a humidity sensor is employed in each main duct 10 and 20. Hereby, the possibility will be created of completely stopping the fan in such circumstances when the incoming air through the conduit 27 is at such high RH that there is a risk of precipitation down in the ventilation space 6. Such a situation may arise in unusual weather conditions, but may possibly occur more frequently if the invention is applied, for example, in wet premises where the flushing of hot water takes place.

If the invention is applied in a wet area, the above-described problem structure may be avoided in that the conduit 27 is led to an adjacent room where normal RH prevails.

The present invention should not be considered as restricted to that described above and shown on the Drawings, modifications being conceivable without departing from the scope of the appended Claims.

**Claims**

1. A method for the ventilation of a floor in a building, comprising the step of causing air to flow into a ventilation space (6) between a sleeper floor (1) and an upper floor (7, 8), air penetration through the upper floor (7, 8) into said ventilation space (6) being prevented, **characterized in that** air is taken in at a temperature which is preferably higher than the temperature prevailing at the level of the sleeper floor (1) or in the ventilation space (6), and is led down into the ventilation space; **that** the air is led from the ventilation space to a measurement point (18) where the relative humidity of the air is measured; **and that** the air is led through a drive means (31) from whence it is permitted to depart, said drive means being maintained at a minimum output when the value measured at said measurement point (18) is less than a predetermined value, and the output of said drive means is increased when the value measured at said measurement point exceeds said predetermined value.

2. The method as claimed in claim 1, **characterized in that** the relative humidity is measured at a second measurement point ahead of the ventilation space (6) counting in the flow direction of the air; **and that** said drive means (31) is stopped when a value measured at said second measurement point exceeds a second predetermined value.

3. The method as claimed in claim 1, **characterized in that** the relative humidity is measured at a second measurement point ahead of the ventilation space (6) counting in the flow direction of the air; **and** that the intake air is heated when a value measured at said second measurement point exceeds a second predetermined value.

4. The method as claimed in claim 1, **characterized in that** the relative humidity is measured at a second measurement point ahead of the ventilation space (6) counting in the flow direction of the air; **and** that the air is taken in from a space which is separated from that space where the ventilation space (6) is located, when a value measured at said second measurement point exceeds a second predetermined value.

5. The method as claimed in any one of claims 1 to 4, **characterized in that** heat is conveyed from a higher to a lower level so as to establish equilibrium of vertical temperature differences and for heating the floor in that space where the floor is located.

6. The method as claimed in any one of claims 1 to 5, **characterized in that** the air is taken in at a high level in the space where the floor is located.

7. The method as claimed in any of claims 1 to 6, **characterized in that** a partial vacuum is created in the ventilation space (6).

8. The method as claimed in any of claims 1 to 7, **characterized in that** the air flow in the ventilation space (6) covers the major part of the upper surface of the sleeper floor (1) and substantially the whole lower side of a spacer member (4) disposed on the upper surface of the sleeper floor.

## Revendications

1. Méthode pour la ventilation d'un plancher dans un bâtiment, comprenant l'opération de mise en circulation d'air dans un espace de ventilation (6) entre un plancher porteur ou de base (1) et un plancher supérieur (7, 8), la pénétration d'air à travers le plancher supérieur (7, 8) vers ledit espace de ventilation (6) étant empêchée, caractérisée en ce que l'air est introduit à une température qui est de préférence supérieure à la température régnant au niveau du plancher porteur (1) ou dans l'espace de ventilation (6), et il est dirigé vers le bas dans l'espace de ventilation; en ce que l'air est dirigé de l'espace de ventilation à un point de mesure (18) où on mesure l'humidité relative de l'air; et en ce que l'air est dirigé à travers des moyens d'entraînement (31) d'où il peut être évacué, lesdits moyens d'entraînement étant maintenus à une capacité minimale lorsque la valeur mesurée audit point de mesure (18) est inférieure à une valeur prédéterminée, et la capacité desdits moyens d'entraînement est augmentée lorsque la valeur mesurée audit point de mesure dépasse ladite valeur prédéterminée.

2. Méthode suivant la revendication 1, caractérisée en ce que l'humidité relative est mesurée à un deuxième point de mesure en amont de l'espace de ventilation (6) considéré dans le sens de circulation de l'air; et en ce que lesdits moyens d'entraînement (31) sont arrêtés lorsqu'une valeur mesurée audit deuxième point de mesure dépasse une deuxième valeur prédéterminée.

3. Méthode suivant la revendication 1, caractérisée en ce que l'humidité relative est mesurée à un deuxième point de mesure en amont de l'espace de ventilation (6) considéré dans le sens de circulation de l'air; et en ce que l'air entrant est chauffé lorsqu'une valeur mesurée audit deuxième point de mesure dépasse une deuxième valeur prédéterminée.

4. Méthode suivant la revendication 1, caractérisée en ce que l'humidité relative est mesurée à un deuxième point de mesure en amont de l'espace de ventilation (6) considéré dans le sens de circulation de l'air; et en ce que l'air est introduit en provenance d'un espace qui est séparé de l'espace où est situé l'espace de ventilation (6), lorsqu'une valeur mesurée audit deuxième point de mesure dépasse une deuxième valeur prédéterminée.

5. Méthode suivant l'une quelconque des revendications 1 à 4, caractérisée en ce que de la chaleur est transférée d'un niveau supérieur à un niveau inférieur, de façon à établir un équilibre des différences verticales de température et à chauffer le plancher dans l'espace où est situé le plancher.

6. Méthode suivant l'une quelconque des revendications 1 à 5, caractérisée en ce que l'air est pris à un niveau haut dans l'espace où est situé le plancher.

7. Méthode suivant l'une quelconque des revendications 1 à 6, caractérisée en ce qu'un vide partiel est créé dans l'espace de ventilation (6).

8. Méthode suivant l'une quelconque des revendications 1 à 7, caractérisée en ce que la circulation d'air dans l'espace de ventilation (6) intéresse la plus grande partie de la surface supérieure du plancher porteur (1) et sensiblement toute la face inférieure d'un élément d'espacement (4) disposé sur la surface supérieure du plancher porteur.

**Ansprüche**

1. Verfahren zur Ventilation eines Fußbodens in einem Gebäude, welches das Einfließen von Luft in einen Ventilationsraum (6), der zwischen einem Unterzug (1) und einem Fußbodenbelag (7, 8) liegt, umfaßt, wobei das Eindringen von Luft durch den Fußbodenbelag (7, 8) in den Ventilationsraum (6) verhindert wird, **dadurch gekennzeichnet,** daß die Luft bei einer Temperatur eingebracht wird, die vorzugsweise höher ist, als die auf der Höhe des Unterzugs (1) oder des Ventilationsraums (6) vorherrschende Temperatur, und in den Ventilationsraum hinuntergeleitet wird, daß die Luft vom Ventilationsraum zu einem Meßpunkt (18) geleitet wird, an dem die relative Luftfeuchtigkeit gemessen wird, und daß die Luft zu einer Antriebsvorrichtung (31) geleitet wird, von wo aus sie entweichen kann, wobei die Antriebsvorrichtung auf minimalem Ausstoß gehalten wird, wenn der an dem Meßpunkt (18) gemessene Wert kleiner als ein vorgegebener Wert ist und der Ausstoß der genannten Antriebsvorrichtung erhöht wird, wenn der an dem Meßpunkt gemessene Wert den vorgegebenen Wert übersteigt.

2. Das Verfahren nach Anspruch 1, **dadurch gekennzeichnet,** daß die relative Feuchtigkeit an einem zweiten Meßpunkt gemessen wird, der in Fließrichtung der Luft dem Ventilationsraum (6) vorgelagert ist, und daß die genannte Antriebsvorrichtung (31) gestoppt wird, wenn ein an dem zweiten Meßpunkt gemessener Wert einen zweiten vorgegebenen Wert übersteigt.

3. Verfahren nach Anspruch 1, **dadurch gekennzeichnet,** daß die relative Feuchtigkeit an einem zweiten Meßpunkt gemessen wird, der in Fließrichtung der Luft dem Ventilationsraum (6) vorgelagert ist, und daß die eingebrachte Luft erwärmt wird, wenn ein an dem zweiten Meßpunkt gemessener Wert einen zweiten vorgegebenen Wert übersteigt.

4. Verfahren nach Anspruch 1, **dadurch gekennzeichnet,** daß die relative Feuchtigkeit an einem zweiten Meßpunkt gemessen wird, der in Fließrichtung der Luft dem Ventilationsraum (6) vorgelagert ist, und daß die Luft aus einem Raum entnommen wird, der von dem Raum getrennt ist, in dem der Ventilationsraum (6) angeordnet ist, wenn ein an dem zweiten Meßpunkt gemessener Wert einen zweiten vorgegebenen Wert übersteigt.

5. Verfahren nach einem der Ansprüche 1 bis 4, **dadurch gekennzeichnet,** daß Wärme von einem höheren zu einem niedrigeren Niveau überführt wird, um einen Ausgleich vertikaler Temperaturdifferenzen zu erreichen und um den Fußboden in dem Raum zu heizen, in dem der Fußboden angeordnet ist.

6. Verfahren nach einem der Ansprüche 1 bis 5, **dadurch gekennzeichnet,** daß die Luft von einem hohen Niveau in dem Raum, in dem der Fußboden angeordnet ist, eingebracht wird.

7. Verfahren nach einem der Ansprüche 1 bis 6, **dadurch gekennzeichnet,**

daß in dem Ventilationsraum (6) ein Unterdruck erzeugt wird.

8. Verfahren nach einem der Ansprüche 1 bis 7, **dadurch gekennzeichnet,** daß der Luftstrom in dem Ventilationsraum (6) den Großteil der oberen Oberfläche des Unterzugs (1) und im wesentlichen die ganze untere Seite eines. Abstandselements (4) bedeckt, welches auf der oberen Oberfläche des Unterzugs aufgebracht ist.

Fig 1

EP 0 230 419 B1

Fig 2

EP 0 230 419 B1

Fig 3